# EUROPÄISCHE PATENTANMELDUNG

(11) **EP 1 746 019 A2**
(43) Veröffentlichungstag der Anmeldung: **24.01.2007**
(21) Anmeldenummer: 06013073.9
(22) Anmeldetag: 24.06.2006
(51) Int. Cl.: B62L 5/02

(54) **Bremseinrichtung für eine Mehrgangnabe**

(30) Priorität: 18.07.2005 DE 102005033438
(71) Anmelder: SRAM Deutschland GmbH, 97404 Schweinfurt (DE)
(72) Erfinder: Dorsch, Peter, 97729 Ramsthal (DE); Kainzner, Peter, 97424 Schweinfurt (DE); Leiter, Berndt, 97534 Waigolshausen (DE)

(57) **Zusammenfassung**

Die Erfindung bezieht sich auf eine Bremseinrichtung für eine Mehrgangnabe für ein Fahrrad, bestehend aus einer Nabenachse (8), einer Nabenhülse (1), einem Bremskonus (5), einem Planetenradträger (2) aus mehreren rohrförmigen Bremsmänteln (6), die mit einer ersten Schräge (10) am Hebelkonus (4) sowie mit einer zweiten Schräge (11) am Bremskonus (5) anliegen und durch Mitnehmernasen auf dem Hebelkonus (4) am Drehen um die Nabenachse (8) gehindert werden, wobei der Hebelkonus (4) ferner ein Kugellager (3) zur Lagerung der Nabenhülse (1) aufweist. Der Hebelkonus (4) ist einteilig weitgehend spanlos hergestellt, wobei seine Mitnehmernasen mit den Bremsmänteln (6) in der Weise zusammenwirken, dass bei allen Bremszuständen ein unverändert kleines Umfangsspiel besteht. Ferner wird durch Kaltpressen des Hebelkonus (4) eine kostengünstige Herstellbarkeit gewährleistet.

## Beschreibung

Die Erfindung betrifft eine Mehrgangnabe für ein Fahrrad, bestehend aus einer Nabenachse, einer Nabenhülse, einem Getriebemechanismus, einem Hebelkonus, einem Bremskonus, einem Planetenradträger sowie aus mehreren rohrförmigen Bremsmänteln, die mit einer ersten Schräge am Hebelkonus sowie mit einer zweiten Schräge am Bremskonus anliegen und durch Mitnehmernasen auf dem Hebelkonus am Drehen um die Nabenachse gehindert werden, wobei der Hebelkonus ferner ein Kugellager zur Lagerung der Nabenhülse aufweist.

Aus der deutschen Patentanmeldung P 43 42 347 geht eine Mehrgangnabe mit einer Bremseinrichtung hervor, bei der am hebelkonusseitigen Ende des Planetenradträgers ein Gewinde angeordnet ist, auf das ein Bremskonus beweglich aufgeschraubt ist. Das Gewinde ist rechtsgängig, so dass der durch eine Friktion in der Drehwilligkeit eingeschränkte Bremskonus beim Antrieb des Planetenradträgers als Mitnehmer wirkt und beim Bremsen durch Rückwärtsdrehen des Planetenradträgers den Bremskonus in axialer Richtung gegen den Hebelkonus verschiebt, wodurch der Bremsvorgang durch Aufweiten des Bremsmantels eingeleitet wird.

Die Bremseinrichtung der vorliegenden Erfindung weist im Gegensatz zu dem Gewinde in der vorgenannten Bremseinrichtung mindestens einen Steigzahn am Planetenradträger und ebenso viele Steigzähne am Bremskonus auf, die derart zusammenwirken, dass beim Bremsen durch Rückwärtsdrehen des Planetenradträgers der Bremskonus in axialer Richtung gegen den Hebelkonus verschoben wird, wodurch ebenfalls der Bremsvorgang durch radiale Verschiebung des Bremsmantels nach außen eingeleitet wird. Dieser weist an seiner inneren Kontur eine erste konusförmige Schräge auf, die sich beim Bremsen auf den Hebelkonus und eine zweite konusförmige Schräge, die sich beim Bremsen auf den Bremskonus aufschieben. Eine Friktionsfeder sorgt in bekannter Weise für die einwandfreie Axialbewegung des Bremskonus. Bremseinrichtungen mit einer Betätigung durch Steigzähne sind bekannt, wobei sich nach längerem Gebrauch Schmiermittelmangel einstellen und die Funktion der Bremseinrichtung beeinträchtigen kann. Dem kann durch die Anordnung einer Schmiermitteltasche begegnet werden, die als Einfräsung in unmittelbarer Nähe zum Steigzahn angebracht ist.

Der Hebelkonus wird durch einen mit dem Rahmen des Fahrrades verbundenen Hebel gegen Verdrehen gesichert und weist soviele Mitnehmernasen auf, wie Bremsmäntel in der Getriebenabe angeordnet sind. Ferner ist dort ein Kugellauf mit einem Kugellager angeordnet, das der Nabenhülse ihre drehfähige Position verleiht. Das Kugellager besteht vorzugsweise aus einem Kugelhalter, der mit den erforderlichen Kugeln eine Baueinheit bildet. Der Radius des Kugellaufes legt einen äußeren Durchmesser am Hebelkonus fest, über den der Kugelhalter bei seiner Montage geschoben wird.

Die Mitnehmernasen weisen jeweils eine Bremsflanke und eine Leergangflanke auf, die die Bremsmäntel in Umfangsrichtung in Position halten. Diese Flanken und somit die Mitnehmernasen weisen eine bestimmte Mindesthöhe auf, die erforderlich ist, um die Bremsmäntel auch dann noch zu fixieren, wenn sie beim Bremsen auf einen größeren Durchmesser bis zur Anlage an der Nabenhülse aufgestiegen sind. Aus diesem Grund überragen die Mitnehmernasen den vorgenannten Durchmesser am Hebelkonus, was zu weiteren konstruktiven und montagetechnischen Neuerungen am Kugellauf führt.

Mit der Bremsflanke wirkt eine erste Stirnseite des Bremsmantels zusammen und mit der Leergangflanke die zweite Stirnseite des Bremsmantels. Während die Bremsflanke und die daran entlang gleitende erste Stirnseite des Bremsmantels in Achsrichtung verlaufen, ist die Leergangflanke und die daran entlang gleitende zweite Stirnseite des Bremsmantels mit einem Winkel ausgeführt, der verhindert, dass der Bremsmantel in jeder seiner Positionen beim Aufsteigen zwischen den ihn in Umfangsrichtung begrenzenden Mitnehmernasen ein zu großes Spiel erhält. Wären beide Flanken zueinander parallel, würde sich das besagte Spiel beim Bremsen zu stark vergrößern und Geräusche in bestimmten Fahrzuständen mit sich bringen. Außerdem macht sich ein zu großes Spiel beim Übergang vom gebremsten Vorwärtsfahren zum gebremsten Rückwärtsfahren mit einem unangenehmen Ruck bemerkbar. Es versteht sich von selbst, dass sich an der zweiten Stirnseite der Winkel nur an der Stelle seiner Berührung mit der Leergangflanke befindet.

Wird beim Fahren die Bremsung durch Rückwärtstreten eingeleitet, dann dreht sich der Steigzahn am Planetenradträger nach rückwärts und verschiebt den von der Friktionsfeder am Drehen gehinderten Bremskonus zum Hebelkonus hin, wodurch die Bremsmäntel nach radial außen gegen die Nabenhülse gepresst werden, indem sie mit ihren Schrägen an den Konen aufgleiten. Die erste Stirnseite der Bremsmäntel gleitet spiellos an den Bremsflanken der Mitnehmernasen entlang und gibt sein Bremsmoment an den Hebelkonus ab, von wo es über den Hebel in den Rahmen des Fahrrades abgeleitet wird. Die zweite Stirnseite weist beim Einleiten des Bremsvorgangs ein kleines vorgegebenes Umfangsspiel auf, welches sich durch die Winkellage der zweiten Stirnseite parallel zu der Leergangflanke nicht oder nur unwesentlich vergrößert und so die Anforderungen an die Bremseinrichtung hinsichtlich Ruckfreiheit erfüllt.

Wegen der radialen Bewegung der Bremsmäntel muss die Bremsflanke und die Leergangflanke ausreichend hoch in radialer Erstreckung ausgeführt sein, was zur Folge hat, dass die Mitnehmernasen über den inneren Durchmesser des Kugellaufs hinausragen. Aus Kostengründen soll der Hebelkonus aber weitgehend spanlos und einteilig hergestellt sein, vorzugsweise kalt gepresst oder aber gesintert, wobei in erster Linie die komplette Form der Mitnehmernasen und die Konuspartie mit hinreichender Genauigkeit gefertigt sein muss. Durch das Schleifen des Kugellaufs wird die Partie hinter den Mitnehmernasen mit dem Durchmesser frei geschliffen. Beim Montieren des Kugelhalters über die Mitnehmernasen hinweg kann passieren, dass Kugeln aus dem Kugelhalter herausgedrückt werden und als separate Teile dann in der Bremseinrichtung störend in Erscheinung treten. Der Kugelhalter kann aber dennoch einwandfrei montiert werden, sofern an den Stellen der Mitnehmernasen jeweils Ausnehmungen am Kugelhalter vorgesehen sind. An den Stellen dieser Ausnehmungen können am Kugelhalter keine Kugeln angeordnet sein, weshalb die im Kugelhalter verbleibenden Kugeln dazwischen ausreichend dimensioniert sein müssen.

Ist die Anordnung der Mitnehmernasen und der Ausnehmungen symmetrisch, so kann der Kugelhalter in zwei Positionen, nämlich auf Umschlag, montiert werden. Soll die falsche der beiden Montagemöglichkeiten ausgeschlossen werden, dann werden die Ausnehmungen und die Mitnehmernasen vorzugsweise am Umfang verschieden breit ausgeführt, so dass der Kugelhalter nur in einer Stellung aufgeschoben werden kann. Die Bremsmäntel sollen aber aus Gründen einer ausreichend großen Serienproduktion untereinander gleich gelassen werden.

Der Bremsmantel weist an seiner der Nabenhülse zugewandten Reibfläche rautenförmige Erhöhungen auf, die durch gekreuzt angeordnete erhöhte Leisten im Umformwerkzeug eingeprägt werden. Hierdurch wird zwischen den Rauten und der Nabenhülse eine gezielt erhöhte Mischreibung erzeugt, die die Bremswirkung erhöht und den Verschleiß in den Bremsmantel verlegt. Immer war diese Anordnung aber mit der Gefahr des Fressens zwischen den Reibpartnern verbunden, weshalb versucht wurde, diese Fressneigung zu vermeiden. Es hat sich gezeigt, dass eine Verbesserung dadurch erzielt wurde, dass man die Rauten nicht - wie bisher - in Umfangsrichtung hintereinander, sondern leicht versetzt angeordnet hat. Man hat deshalb das Muster der Rauten leicht verdreht, so dass diese nun auf einer Spirale mit einer geringen Steigung angeordnet sind. So findet jede Raute eine neue Bahn auf der Reibfläche in der Nabenhülse mit ausreichender Schmierung, die das Fressen verhindert.

Die Friktionsfeder ist als einfache Spiralfeder in der Weise zwischen dem Bremskonus und dem Hebelkonus angeordnet, dass sie einen äußeren Zylinder am Bremskonus mit Vorspannung umschließt und im Hebelkonus in einem inneren Zylinder mit Vorspannung anliegt. In der Antriebsdrehrichtung verringern sich die Kräfte der Umschlingungen und in der Bremsdrehrichtung verstärken sich diese Kräfte, so dass die Bremswilligkeit der Bremseinrichtung gesichert ist.

Die Erfindung hat es sich daher zur Aufgabe gemacht, eine Bremseinrichtung für eine Getriebenabe zu schaffen, deren lose eingelegte Bremsmäntel in Umfangsrichtung ein in allen Fahrzuständen geringes Spiel aufweisen, kostengünstig herstellbar und leicht montierbar ist, wobei mögliche Fehlmontagen im Reparaturfall ausgeschlossen sind.

Die Lösung der Aufgabe ist im kennzeichnenden Teil des Hauptanspruches erläutert. Ausgestaltungen sind den Unteransprüchen zu entnehmen.

Anhand mehrerer Zeichnungen ist eine Bremseinrichtung einer Mehrgangnabe beschrieben. Es zeigen
- Fig.1: eine Bremseinrichtung einer Mehrgangnabe mit einer Nabenhülse, einer Nabenachse, einem Planetenradträger, einem Bremskonus, mehreren Bremsmänteln und einem Hebelkonus sowie mit einem aus einem Kugelhalter und Kugeln bestehenden Kugellager im Teilschnitt;
- Fig.2: die Darstellung des Bremsmantels mit einer ersten Stirnseite und einer zweiten Stirnseite mit Hilfe von vier Skizzen;
- Fig. 3: den Hebelkonus mit der Anordnung jeweils einer Bremsflanke und einer Leergangflanke an den Mitnehmernasen in zwei Ansichten;
- Fig. 4: den Bremskonus mit einem Steigzahn als Ausschnitt;
- Fig. 5: den Kugelhalter mit einer Ausnehmung für die Mitnehmernase.

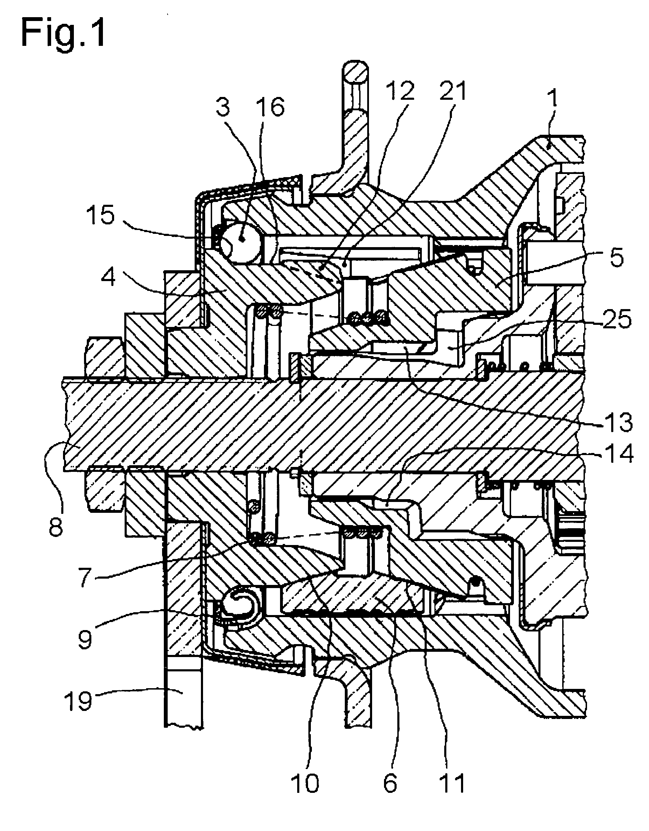

Die Mehrgangnabe besteht gemäß Fig.1 im Bereich der Bremseinrichtung im wesentlichen aus einer Nabenachse 8, einer Nabenhülse 1, einem Bremskonus 5, einem Planetenradträger 2, aus mehreren rohrförmigen lose eingelegten Bremsmänteln 6, die mit einer ersten Schräge 10 an einem Hebelkonus 4 sowie mit einer zweiten Schräge 11 am Bremskonus 5 anliegen und durch Mitnehmernasen 12 auf dem Hebelkonus 4 am Drehen um die Nabenachse 8 gehindert werden, wobei der Hebelkonus 4 ferner ein Kugellager 3 zur Lagerung der Nabenhülse 1 aufweist. Der Bremskonus 5 ist mit dem Planetenradträger 2 über Steigzähne 13 am Bremskonus 5 und über Steigzähne 14 am Planetenradträger 2 verbunden, wobei in einer Antriebsdrehrichtung 26 die Steigzähne 13 des Bremskonus 5 von den Steigzähnen 14 am Planetenradträger 2 mitgenommen werden. Wird beim Bremsen hingegen der Planetenradträger 2 entgegen der Antriebsdrehrichtung 26 betätigt, dann wird der Bremskonus 5 durch Entlanggleiten der Steigzähne 14 am Planetenradträger 2 an den Steigzähnen 13 im Bremskonus 5 mit Hilfe einer Friktionsfeder 7 in Achsrichtung verschoben. Diese Friktionsfeder 7 verhindert eine Verdrehung des Bremskonus 5 entgegen der Antriebsdrehrichtung 26 beim Bremsen.

Eine Schmiermitteltasche 25 mit einer Fettfüllung in der Nähe der Steigzähne 14 am Planetenradträger 2 gewährleistet für lange Zeit eine einwandfreie Funktion der Bremseinrichtung.

Das Kugellager 3 lagert die Nabenhülse 1 auf dem Hebelkonus 4 und besteht aus Kugeln, die in einem Kugelhalter 9 in ihrer Position gehalten werden. Dieser weist Ausnehmungen 22 auf, die bei seiner Montage auf dem Hebelkonus 4 den Mitnehmernasen 12 freien Durchgang erlauben.

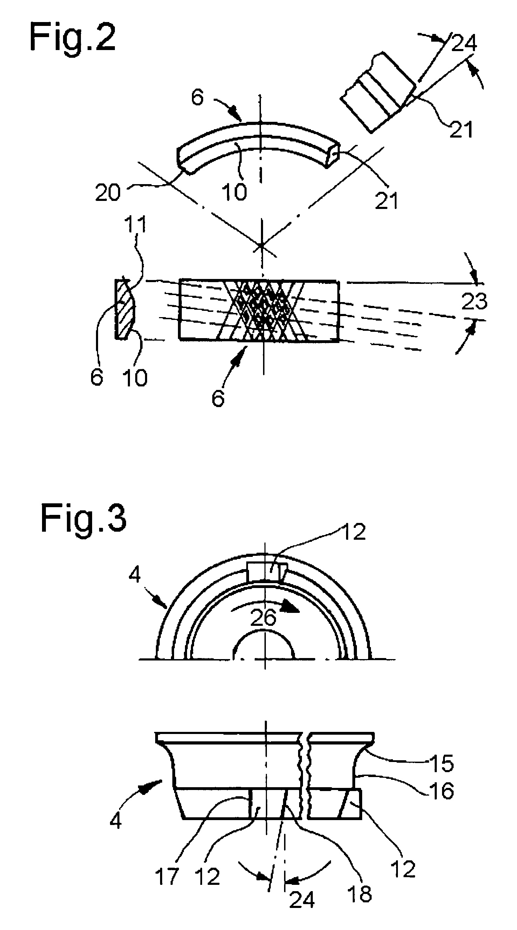

Die Fig. 2 stellt den Bremsmantel 6 in vier verschiedenen Ansichten dar und zeigt die zur Nabenhülse 1 gewandte Bremsoberfläche mit einem rautenförmigen Muster, das wegen verbesserter Bremseigenschaften in Spiralenform mit einer Steigung 23 angeordnet ist. Im zur Nabenachse 8 nach innen weisenden Bereich sind die erste Schräge 10 und die zweite Schräge 11 angeordnet, außerdem wird eine erste Stirnseite 20, die im Einbauzustand mit der Bremsflanke 17 und eine zweite Stirnseite 21, die mit der Leergangflanke 18 an der Mitnehmernase 12 zusammenwirkt, gezeigt, wobei die zweite Stirnseite 21 durch einen Winkel 24 in einer Antriebsdrehrichtung 26 ein Spiel zu der Leergangflanke 18 konstant hält.

Aus der Fig. 3 ist in zwei Ansichten des Hebelkonus 4 ersichtlich, wie die Mitnehmernase 12 im Konusbereich angeordnet ist und wie vor allem die radiale Höhe der Mitnehmernase 12 den aus dem Kugellauf 15 sich ergebenden Durchmesser 16 übersteigt. Die Bremsflanke 17 verläuft in Achsrichtung und die Leergangflanke 18 weist den Winkel 24 auf, der beim Betätigen des Planetenradträgers 2 entgegen der Antriebsdrehrichtung 26 das Spiel zur zweiten Stirnseite 21 konstant hält.

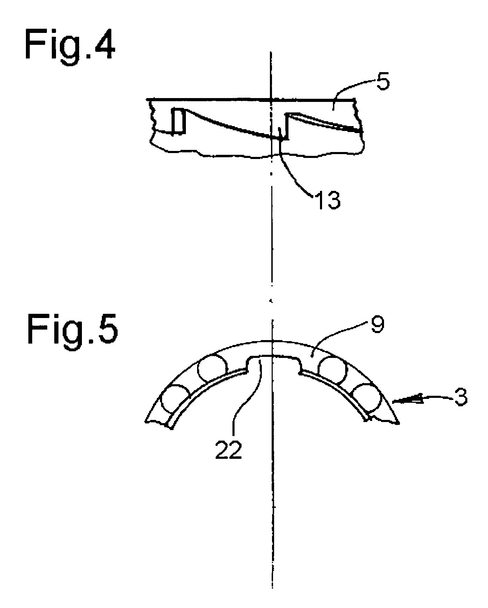

Aus der Fig. 4 geht hervor, wie der Steigzahn 13 im Innenbereich des Bremskonus 5 angeordnet ist.

Mit der Fig. 5 wird der Kugelhalter 9 in einer Teilansicht gezeigt, der gemeinsam mit den Kugeln das Kugellager 3 bildet und Ausnehmungen 22 aufweist, die in ihrer Größe und Lage den Mitnehmernasen 12 entsprechen, um eine einwandfreie Montagemöglichkeit zu schaffen.

### Bezugszeichenliste

- 1.: Nabenhülse
- 2.: Planetenradträger
- 3.: Kugellager
- 4.: Hebelkonus
- 5.: Bremskonus
- 6.: Bremsmantel
- 7.: Friktionsfeder
- 8.: Nabenachse
- 9.: Kugelhalter
- 10.: erste Schräge
- 11.: zweite Schräge
- 12.: Mitnehmernase
- 13.: Steigzahn am Bremskonus
- 14.: Steigzahn am Planetenradträger
- 15.: Kugellauf
- 16.: Durchmesser
- 17.: Bremsflanke
- 18.: Leergangflanke
- 19.: Hebel
- 20.: erste Stirnseite
- 21.: zweite Stirnseite
- 22.: Aussparung
- 23.: Steigung
- 24.: Winkel
- 25.: Schmiermitteltasche
- 26.: Antriebsdrehrichtung

## Patentansprüche

1. Mehrgangnabe für ein Fahrrad, bestehend aus einer Nabenachse, einer Nabenhülse, einem Getriebemechanismus, einem Hebelkonus, einem Bremskonus einem Planetenradträger sowie aus mehreren rohrförmigen Bremsmänteln, die mit einer ersten Schräge am Hebelkonus sowie mit einer zweiten Schräge am Bremskonus anliegen und durch Mitnehmernasen auf dem Hebelkonus am Drehen um die Nabenachse gehindert werden, wobei der Hebelkonus ferner ein Kugellager zur Lagerung der Nabenhülse aufweist,
**dadurch gekennzeichnet,**
**dass** die Mitnehmernasen (12) je eine Bremsflanke (17) und eine Leergangflanke (18) aufweisen, die ein in Umfangsrichtung wirkendes Spiel zwischen den Bremsmänteln (6) und den Mitnehmernasen (12) konstant niedrig halten.

2. Bremseinrichtung nach Anspruch 1,
**dadurch gekennzeichnet,**
**dass** der Hebelkonus (4) einteilig ausgeführt ist, wobei die Mitnehmernasen (12) im Konusbereich angeformt und im Durchmesser größer sind, als der durch den Kugellauf (15) bestimmte Durchmesser (16) des Hebelkonus (4).

3. Bremseinrichtung nach Anspruch 1 oder 2,
**dadurch gekennzeichnet,**
**dass** eine erste Stirnseite (20) an dem Bremsmantel (6) zur Aufnahme der Bremskräfte gerade entlang einer Mantellinie ausgeführt ist und eine zweite Stirnseite (21) an der Stelle ihrer Berührung an der Mitnehmernase (12) einen Winkel (24) aufweist.

4. Bremseinrichtung nach Anspruch 1 oder 3,
**dadurch gekennzeichnet,**
**dass** die Mitnehmernasen (12) jeweils eine Bremsflanke (17) und eine Leergangflanke (18) aufweisen, wobei die Leergangflanke (18) in einem Winkel (24) parallel zu der zweiten Stirnseite (21) der Bremsmäntel (6) verläuft.

5. Bremseinrichtung nach einem der Ansprüche 1 bis 4,
**dadurch gekennzeichnet,**
**dass** der Hebelkonus (4) durch spanlose Materialumformung aus einem Rohteil gefertigt ist.

6. Bremseinrichtung nach Anspruch 5,
**dadurch gekennzeichnet,**
**dass** der Hebelkonus (4) kalt gepresst ist.

7. Bremseinrichtung nach Anspruch 5,
**dadurch gekennzeichnet,**
**dass** der Hebelkonus (4) gesintert ist.

8. Bremseinrichtung nach einem der Ansprüche 1 bis 7,
**dadurch gekennzeichnet,**
**dass** der Konusbereich und die Mitnehmernasen (12) spanlos am Hebelkonus (4) angeformt sind.

9. Bremseinrichtung nach Anspruch 1,
**dadurch gekennzeichnet,**
**dass** das Kugellager (3) aus Kugeln und einem Kugelhalter (9) besteht, der Ausnehmungen (22) aufweist, die entsprechend der Verteilung der Mitnehmernasen (12) am Umfang des Konusbereiches angeordnet sind.

10. Bremseinrichtung nach einem der Ansprüche 1 bis 8,
**dadurch gekennzeichnet,**
**dass** die Mitnehmernasen (12) und entsprechend die Ausnehmungen (22) am Umfang unsymmetrisch angeordnet sind.

11. Bremseinrichtung nach einem der Ansprüche 1 bis 9,
**dadurch gekennzeichnet,**
**dass** die Mitnehmernasen (12) und entsprechend die Ausnehmungen (22) unterschiedlich breit sind.

12. Bremseinrichtung nach einem der Ansprüche 1 bis 9,
**dadurch gekennzeichnet,**
**dass** eine verminderte Anzahl von Kugeln im Kugelhalter (9) integriert sind.
